(19) Europäisches Patentamt
European Patent Office
Office européen des brevets

(11) EP 3 238 816 B1

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
***B01J 13/02*** *(2006.01)* ***B01J 13/14*** *(2006.01)*

(21) Anmeldenummer: **16197703.8**

(22) Anmeldetag: **08.11.2016**

(54) **VERFAHREN ZUR HERSTELLUNG VON MIKROKAPSELN**
PROCESS FOR THE MANUFACTURE OF MICROCAPSULES
PROCÉDÉ POUR LA PREPARATION DE MICROCAPSULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2016 EP 16167763**

(43) Veröffentlichungstag der Anmeldung:
**01.11.2017 Patentblatt 2017/44**

(73) Patentinhaber: **Symrise AG**
**37603 Holzminden (DE)**

(72) Erfinder:
- **ROST, Benjamin**
  **37619 Bodenwerder (DE)**
- **BERTRAM, Ralf**
  **37603 Holzminden (DE)**
- **GREGOR, Daniela**
  **37603 Holzminden (DE)**
- **EBBECKE, Jan Peter**
  **37620 Halle (DE)**
- **LANGE, Sabine**
  **37603 Holzminden (DE)**

(74) Vertreter: **Fabry, Bernd**
**IP2 Patentanwalts GmbH**
**Schlossstrasse 523-525**
**41238 Mönchengladbach (DE)**

(56) Entgegenhaltungen:
**EP-A1- 2 204 155**
**EP-A1- 2 689 835**
**EP-A1- 2 757 146**
**EP-B1- 2 111 214**
**DE-A1- 2 303 866**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 238 816 B1

## Beschreibung

### GEBIET DER ERFINDUNG

Die Erfindung befindet sich auf dem Gebiet der Verkapselung von Wirkstoffen und betrifft ein neues Verfahren mit dessen Hilfe sich insbesondere die Prozessführung hinsichtlich Stabilität und Größe der Partikel verbessern lässt.

### STAND DER TECHNIK

Unter dem Begriff "Kapsel" versteht der Fachmann im Allgemeinen um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen.

Von besonderem Interesse sind dabei so genannte Mikrokapseln, die Durchmesser im Bereich von etwa 0,0001 bis 5, vorzugsweise 0,001 bis 0,5 und insbesondere 0,005 bis 0,1 mm aufweisen. Die erste industrielle Herstellung von Mikrokapseln geht auf das Jahr 1957 zurück, in dem erstmals Kopierpapier auf den Markt gebracht wurde, welches die Farbstoffe in mikroverkapselter Weise enthielt. Heute sind zahllose Typen von Mikrokapseln im Handel und werden in den unterschiedlichsten Bereichen eingesetzt. Ein wichtiges Segment ist die Ausrüstung von Fasern und Textilien mit mikroverkapselten Wirkstoffen, die entweder beim Ausrüsten oder im Verlauf des Waschprozesses aufgebracht werden. Beim Tragen brechen die Kapseln infolge der mechanischen Belastung auf und setzen den Duftstoff über einen längeren Zeitraum frei.

Zu den wichtigsten Mikrokapseln zählen solche vom Aminoplast-Typ. Die Herstellung dieser Kapseln erfolgt vereinfacht dadurch, dass man zunächst unter starker Scherung und in Gegenwart von Emulgatoren eine O/W-Emulsion herstellt, welche das wasserlösliche Monomer, ein so genanntes Amin-Formaldehyd-Prekondensat, und den wasserunlöslichen Wirkstoff, etwa ein Parfümöl enthält. Die Polykondensation wird durch einen pH-Wert Wechsel initiiert, beispielsweise indem man den pH-Wert durch Säurezugabe auf etwa 3,5 einstellt. Die Polykondensate scheiden sich auf den Öltröpfchen in der Emulsion ab und hüllen sie allmählich ein. Nach Abschluss der Polykondensation ist aus der Emulsion eine Mikrokapseldispersion entstanden. Die Kapseln besitzen jedoch noch eine weiche, elastische Hülle, welche noch nicht die nötige Diffusionstabilität und Textureigenschaften liefert. Es folgt daher der dritte Schritt, bei dem man die Temperatur auf etwa 60 °C anhebt, was zu einer Vernetzung der Polymere in der Wandung und zur Aushärtung der Kapseln führt. Ein entsprechendes Verfahren ist beispielsweise aus der EP 2111214 B1 (GIVAUDAN) bekannt.

Aus der DE 23 03 866 A1 (FUJI) ist ein stabiles konzentriertes Gemisch zur Herstellung von Mikrokapseln bekannt, enthaltend (a) ein Epoxypropyltrialkylammommiumsalz sowie (b) ein oder mehrere organische Losungsmittel, wobei diese Zubereitungen zusätzlich ein Alkylsulfosuccinat, das Alkylgruppen mit 6 bis 16 Kohlenstoffatomen besitzt, oder ein Alkylsulfosuccinamat, dessen Carbonsäureamidgruppe mit einer Alkylgruppe mit 8 bis 20 Kohlenstoffatomen substituiert ist, sowie ein mit Wasser mischbares Lösungsmittel als Komponente b) enthalten.

Gegenstand der EP 2669835 A1 (KOEHLER) ist ein Verfahren zur Herstellung von Mikrokapseln. Das Kennzeichen dieser Kapseln ist eine spezielle Teilchengrößenverteilung, die mindestens zwei Maxima aufweist, wobei das Hauptmaximum der Teilchengröße im Bereich von 5 bis 100 μm liegt und wobei das von den Mikrokapseln, deren Teilchengröße kleiner oder gleich ¼ der Teilchengröße des Hauptmaximums beträgt, eingenommene Volumen größer oder gleich etwa 20 % des Gesamtvolumens der Mikrokapseln ist. Die Kapselwandung kann dabei aus einem methylierten Melamin-Formaldehydharz und/oder Harnstoff-Formaldehydharz und/oder Reaktionsprodukten von Aldehyden mit Thioharnstoff, N-Alkylharnstoff, Guanidin, Acetoguanamin, Benzoguanamin, Caprionoguanamin, Cyanamin, Dicyandiamid und/oder Alkyl-/Arylsulfonamid bestehen. Weitere Mikrokapseln werden in EP 2204155 A1 und EP 2757146 A1 beschrieben.

Ein erster wesentlicher Aspekt bei der Mikroverkapselung betrifft die Partikelgrößenverteilung. Je enger diese Verteilung im Emulsionsprozess erzeugt werden kann umso exakter können die Eigenschaften der Kapseln eingestellt werden. Die Einstellung der Kapselgröße hat einen direkten Einfluss auf die Brucheigenschaften der Kapseln und damit auch auf die sensorische Performance der Technologie in der finalen Anwendung.

Der zweite wesentliche Aspekt ist die Stabilisierung der Emulsion. Hier müssen entsprechende Tenside bzw. Schutzkolloide auf die verwendeten Prepolymere abgestimmt werden. Die Auswahl eines falschen Schutzkolloides kann zu einer fehlerhaften Verkapselung führen.

Schließlich besteht der Wunsch, die Emulsion mit möglichst geringen Scherkräften realisieren zu können. Der Grund hierfür liegt auf der Hand, da bei hohen Scherkräften die gerade gebildete dünne Hülle zerstört werden kann und damit ein erhöhter Anteil Polymergrieß im Produkt auftritt. Je nach Rührergeometrie kann es zusätzlich zu einem hohen Lufteintrag ins System und in der Folge zur Verkapselung von Luftblasen kommen.

Die komplexe Aufgabe der vorliegenden Problematik hat daher darin bestanden, den Stand der Technik bezüglich der Herstellung von Mikrokapseln, speziell von Aminoplast-Mikrokapseln dahingehend zu verbessern, dass der mittlere Durchmesser der Kapseln verkleinert und vereinheitlicht wird. Mit anderen Worten wird eine möglichst monodisperse Teilchengrößenverteilung angestrebt, die ein ausgeprägteres Maximum bei kleineren Durchmessern aufweist. Das gesuchte Verfahren sollte es zudem erlauben, infolge höherer Emulsionsstabilität mit geringerer Scherkraft auszukommen, um auf diese Weise weniger störenden Polymergrieß aus zerstörten Kapseln freizusetzen.

## BESCHREIBUNG DER ERFINDUNG

Ein erster Gegenstand der Erfindung betrifft ein Verfahren zur Herstellung von Mikrokapseln, speziell Aminoplast-Mikrokapseln, umfassend die folgenden Schritte:

(a) Bereitstellung einer ersten wässrigen Zubereitung enthaltend mindestens ein PrePolymer;
(b) Bereitstellen einer zweiten nicht-wässrigen Zubereitung enthaltend den zu verkapselnden Wirkstoff;
(c) Vermischen der wässrigen und der nicht-wässrigen Phase in Gegenwart mindestens eines Emulgators und/oder Stabilisators unter Ausbildung einer Emulsion;
(d) Polymerisieren des in der Emulsion aus Schritt (c) enthaltenen mindestens einen Pre-Polymers unter Erhalt einer Dispersion von Mikrokapseln, die den Wirkstoff einschließen;
(e) Härten und Vernetzen der im Schritt (d) erhaltenen Mikrokapseln sowie gegebenenfalls
(f) Abtrennen und Trocknen der Mikrokapseln aus der Dispersion,

welches sich dadurch auszeichnet, dass die Bildung der Emulsion in Schritt (c) in Gegenwart von mindestens einem 1,2-Diol erfolgt.

Überraschenderweise wurde gefunden, dass der Zusatz von 1,2-Diolen während der Bildung der O/W-Emulsion zu einer deutlichen Reduzierung der Partikelgröße, hin zu Partikelgrößenverteilungen mit kleinerem Mittelwert führt. Gleichzeitig wird eine Stabilisierung der Emulsion erreicht und damit in der Folge eine Verminderung der Rührgeschwindigkeit möglich.

Die Erfindung wird an Hand der beiden **Abbildungen 1 und 2** näher erläutert.

**Abbildung 1** zeigt eine Partikelgrößenverteilung bei der Herstellung von Aminoplast-Mikrokapseln einmal unter Zugabe von 1 Gew.-% SymDiol® 68 (1,2-Hexandiol:1,2-Octandiol 1:1) (links) und einmal ohne Zusatz des Diols (rechts). Man erkennt, dass das Maximum ausgeprägter und zu kleineren Teilchendurchmessern verschoben ist.

Eine ähnliche Darstellung liefert **Abbildung 2**; die linke Kurve entspricht wieder dem Zusatz von 1 Gew.-% SymDiol® 68, die mittlere Kurve dem Zusatz von 1,2-Pentandiol (Hydrolite® 5) und die rechte Kurve ohne Zusatzstoff.

Die Partikelgrößenverteilung beträgt im Verfahren des Stands der Technik, beispielsweise in dem, der in der EP 2111214 B1 beschrieben wird, 10 bis 80 μm. Durch Zugabe von Diolen lässt sich diese auf etwa 10 bis 35 μm reduzieren. Diese engere Verteilung ermöglicht die Herstellung von Kapselsystemen, die in Ihrer sensorischen Leistung leichter optimiert werden können. Hinzu kommen Vorteile bei der Stabilisierung der Kapselsysteme in der finalen Applikation. Die Größe der Kapseln fließt nach dem Strok'schen Gesetz mit in die Separationsgeschwindigkeit ein. Eine gleichmäßigere Verteilung ermöglicht es beispielsweise, die Dichte der Parfümöle bei einer Waschmittelbase genauer zuzuschneiden. Damit ist die Verteilung der Kapseln in der Applikation homogener und ermöglicht stabilere Formulierungen. Die Drehzahl der Rührer kann in diesem Fall um 200 bis 260 U/min reduziert werden, was einer durchschnittlichen Verminderung um etwa 15 % entspricht.

Der Kapseldurchmesser besitzt darüber hinaus auch einen Einfluss auf die Dichte gemäß der folgenden Formel:

$$V(p) = \frac{2r2\ g\ (\rho k\text{-}\rho f)}{9\eta}$$

Wobei V(p) die Sedimentationsgeschwindigkeit darstellt, g einen Schwerkraftfaktor, pk die Kapseldichte, ρf die Flüssigkeitsdichte und η die Viskosität der Flüssigkeit.

**Abbildung 3** zeigt zwei Mikrokapseldispersionen: die linke wurde nach dem Standardverfahren hergestellt und weist einen mittleren Teilchendurchmesser von etwa 50 μm auf, die rechte wurde unter Zugabe von 1,2-Diolen hergestellt und weist einen mittleren Teilchendurchmesser von etwa 22 μm auf. Wie man sieht, liegen die Mikrokapseln in der erfindungsgemäßen Probe homogen dispergiert vor, während sie in der Vergleichsprobe zu Boden gesunken sind.

Des Weiteren ist die Polymerabscheidung bei den sogenannten Phasenseparationsprozessen der Verkapselung einer der entscheidenden Punkte, um eine stabile Verkapselung zu erzeugen. Im Prozess kommt es gerade bei einer Konzentrationsänderung von Prekondensaten häufig zu Abscheidungsproblem. Diese äußeren sich in einem Anstieg der Viskosität. Es kann auch zu Polymerausfällungen und einem kompletten polymerisieren des Ansatzes führen. Die Kondensatausfällungen sorgen für einen erhöhten Feinanteil in der Slurry. Dies ist aus den folgenden Gründen äußerst nachteilig:

- Der Feinanteil führt zu einer erhöhten Trübung beispielsweise in der Waschmittel- oder Weichspüler-Base, was vom Verbraucher als Qualitätsminderung angesehen wird,

- ausgefälltes Polymer steht nicht zur Verfügung um die Kapselhülle auf die benötigte Stärke zu bringen, und

- der Feinanteil kann zu einem Bodensatz in der Applikation führen und sorgt zusätzlich für einen negativen visuellen Effekt im Endprodukt.

Der Zusatz der Diole führt zu einer optimierten und gesteuerten Polymerabscheidung, wodurch die Hüllenstärke reduziert werden kann. Insbesondere wird das Risiko, dass das Prekondensat nicht vollständig auf der Hülle abgeschieden wird, minimiert.

Im Bereich der Mikroverkapselung ist die mikrobiologische Stabilisierung der Produkte ebenfalls ein sehr wichtiger Faktor. Je nach verwendetem chemischem System ist genügend Formaldehyd enthalten, um die Dispersionen gegen Keimbefall zu schützen. Markt und Gesetzgebung erfordern allerdings eine Absenkung der Formaldehyd Konzentration wobei die Reduzierung der Hüllstärken den Anteil an Formaldehyd haltigen Prekondensaten zusätzlich vermindert. Dies führt dazu, dass die Produkte nicht ausreichend stabilisiert sind, um eine Verkeimung zu verhindern. Hier besteht ein weiterer Vorteil der Mitverwendung von Diolen: da diese antimikrobiell wirksam sind, werden Produkte erhalten, die ausreichend stabilisiert sind, ohne dass es des Zusatzes von weiteren Konservierungsmitteln bedarf.

## PRE-POLYMERE

Bevorzugte Pre-Polymere im Sinne der Erfindung sind so genannte Amin-Formaldehyd-Prekondensate (AFP). Diese bilden in einer bevorzugten Ausführungsform das Material, welches durch Polykondensation schließlich die Hülle oder Wandung der Kapsel bildet und den Wirkstoff einschließt.

Bei der Aminkomponente der AFP handelt es sich üblicherweise um Harnstoff oder insbesondere Melamin. Da die Polykondensation jedoch thermisch gesteuert wird, ist deren Kontrolle mitunter schwierig. Die bevorzugten AFP sind daher Alkylierungssprodukte des Melamins mit kurzkettigen Alkoholen und insbesondere die so genannten hoch oder teilweise alkoxylierte und gegebenenfalls auch noch alkylierte Melamine, wie sie in wässrigmethanolischer Formaldehydlösung unter der Bezeichnung Luracoll®, insbesondere Luracoll® SD von der BASF angeboten werden.

Bei der Aminkomponente der AFP handelt es sich üblicherweise um Harnstoff oder insbesondere Melamin. Da die Polykondensation jedoch thermisch gesteuert wird, ist deren Kontrolle mitunter schwierig. Die bevorzugten AFP sind daher Alkylierungssprodukte des Melamins mit kurzkettigen Alkoholen und insbesondere die so genannten hoch oder teilweise alkoxylierte und gegebenenfalls auch noch alkylierte Melamine, wie sie in wässrigmethanolischer Formaldehydlösung unter der Bezeichnung Luracoll®, insbesondere Luracoll® SD von der BASF angeboten werden.

Die Reaktion zwischen Melamin und Formaldehyd wurde beispielsweise schon von *J. Liebig* im Jahre 1834 entdeckt und wird seit 1936 industriell genutzt. Sie kann durch folgendes Schema beschrieben werden:

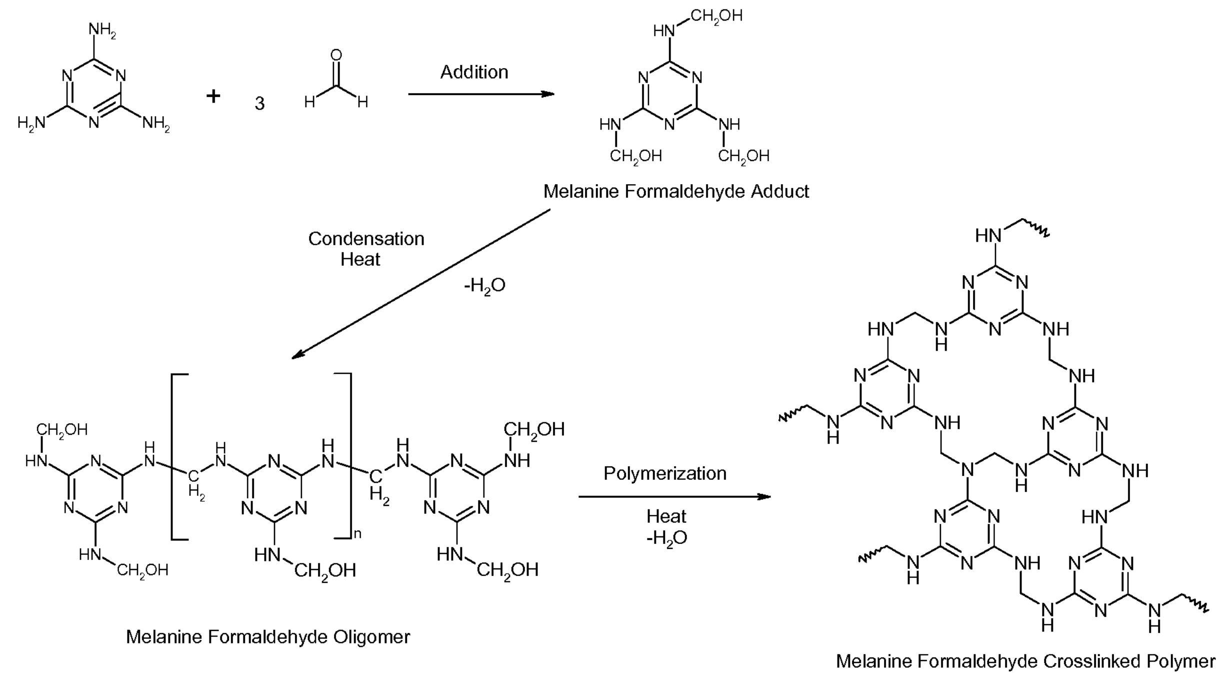


Melanine Formaldehyde Adduct

Melanine Formaldehyde Oligomer

Melanine Formaldehyde Crosslinked Polymer

Vorzugsweise kommen als Pre-Polymere in Betracht: gegebenenfalls alkylierte Mono- und Polymethylol-Harnstoff- sowie Mono- und Polymethylol-Melamin-Prekondensate, wie sie beispielsweise unter der Bezeichnung URAC (Cytec Corp.) vertrieben werden oder auch partiell methylierte Mono- und Polymethylol-1,3,5-triamino-2,4,6-triazin-Prekondensate, die im Handel unter der Bezeichnung CYMEL (Cytec Corp.) erhältlich sind. Schließlich kommen auch Mono- und Polyalkylolbenzoguanamin- bzw. Mono- und Polyalkylolglycuril-Prekondensate in Betracht. Soweit diese Prekondensate über Alkylgruppen verfügen, sind sie weniger reaktiv und länger lagerbar. Die bevorzugten Prekondensate umfassen die Polymethylolmelamine sowie das Polymethylol-1-(3,5-dihydroxy-methylbenzyl)-3,5-triamino-2,4,6-triazin.

Ebenfalls eingesetzt werden können Poly[N-(2,2-dimethoxy-1-hydroxy)]-polyamine wie beispielsweise Di-[N-(2,2-dimethoxy-1-hydroxy)]harnstoff, Tri-[N-(2,2-dimethoxy-1-hydroxy)]melamin, Tetra-[N-(2,2-dimethoxy-1-hydroxy)]glycouryl sowie Di-[N-(2,2-dimethoxy-1-hydroxy)]benzoguanidin und deren Mischungen.

Weiterhin bevorzugte Pre-Polymere sind Dialdehyde sowie Resorcin.

## WIRKSTOFFE

Die Natur der Wirkstoffe, die verkapselt werden sollen, ist weitgehend unkritisch, solange diese hinreichend wasserunlöslich sind, da sich andernfalls keine Emulsionen bilden, auf der Tröpfchenoberfläche die Abscheidung der Polykondensate erfolgen kann. Vorzugsweise kommen als Wirkstoffe Aromen, Duftstoffe oder auch biogene Prinzipien in Betracht, als da sind:

### Aromen

Typische Beispiele für Aromen, die im Sinne der Erfindung verkapselt werden können, umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol,

Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

**Duftstoffe**

**Extrakte aus natürlichen Rohstoffen,** wie Etherische Öle, Concretes, Absolüs, Resine, Resinoide, Balsame, Tinkturen wie z. B. Ambratinktur; Amyrisöl; Angelicasamenöl; Angelicawurzelöl; Anisöl; Baldrianöl; Basilikumöl; Baummoos-Absolü; Bayöl; Beifussöl; Benzöresin; Bergamotteöl; Bienenwachs-Absolü; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolü; Castoreum-Absolü; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eau de brouts-Absolü; Eichenmoos-Absolü; Elemiöl; Estragonöl; Eucalyptus-Citriodora-öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl, Helichrysum-Absolü; Helichrysumöl; Ingweröl; Iriswurzel-Absolü; Iriswurzelöl; Jasmin-Absolü; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolü; Labdanumresin; Lavandin-Absolü; Lavandinöl; Lavendel-Absolü; Lavendelöl; Lemongrasöl; Liebstocköl; Limetteöl destilliert; Limetteöl gepresst; Linalööl; Litsea-Cubeba-öl; Lorbeerblätteröl; Macisöl; Majoranöl; Mandarinenöl; Massoirindenöl; Mimosa-Absolü; Moschuskörneröl; Moschustinktur; Muskateller-Salbei-öl; Muskatnussöl; Myrrhen-Absolü; Myrrhenöl; Myrtenöl; Nelkenblätteröl; Nelkenblütenöl; Neroliöl; Olibanum-Absolü; Olibanumöl; Opopanaxöl; Orangenblüten-Absolü; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolü; Rosenholzöl; Rosenöl; Rosmarinöl; Salbeiöl dalmatinisch; Salbeiöl spanisch; Sandelholzöl; Selleriesamenöl; Spiklavendelöl; Sternanisöl; Styraxöl; Tagetesöl; Tannennadelöl; Tea-Tree-öl; Terpentinöl; Thymianöl; Tolubalsam; Tonka-Absolü; Tuberosen-Absolü; Vanilleextrakt; Veilchenblätter-Absolü; Verbenaöl; Vetiveröl; Wacholderbeeröl; Weinhefenöl; Wermutöl; Wintergrünöl; Ylangöl; Ysopöl; Zibet-Absolü; Zimtblätteröl; Zimtrindenöl; sowie Fraktionen davon bzw. daraus isolierte Inhaltsstoffe;
**Kohlenwasserstoffe,** wie z. B. 3-Caren; a-Pinen; beta -Pinen; alpha-Terpinen; gamma-Terpinen; p-Cymol; Bisabolen; Camphen; Caryophyllen; Cedren; Farnesen; Limonen; Longifolen; Myrcen; Ocimen; Valencen; (*E,Z*)-1,3,5-Undecatrien;
**Aliphatische Alkohole,** wie z. B. Hexanol; Octanol; 3-Octanol; 2,6-Dimethylheptanol; 2-Methylheptanol, 2-Methyloctanol; (*E*)-2-Hexenol; (*E*)- und (*Z*)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (*E,Z*)-2,6-Nonadienol; 3,7-Dimethyl-7-methoxyoctan-2-ol; 9-Decenol; 10-Undecenol; 4-Methyl-3-decen-5-ol;
**Aliphatische Aldehyde und deren Acetale,** wie z. B. Hexanal; Heptanal; Octanal; Nonanal; Decanal; Undecanal; Dodecanal; Tridecanal; 2-Methyloctanal; 2-Methylnonanal; (*E*)-2-Hexenal; (*Z*)-4-Heptenal; 2,6-Dimethyl-5-heptenal; 10-Undecenal; (*E*)-4-Decenal; 2-Dodecenal; 2,6,10-Trimethyl-5,9-undecadienal; Heptanal-diethylacetal; 1,1-Dimethoxy-2,2,5-trimethyl-4-hexen; Citronellyloxyacetaldehyd;

**Aliphatische Ketone und deren Oxime**, wie z. B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on;

**Aliphatische schwefelhaltige Verbindungen,** wie z. B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1-Menthen-8-thiol;

**Aliphatische Nitrile,** wie z. B. 2-Nonensäurenitril; 2-Tridecensäurenitril; 2,12-Tridecensäurenitril; 3,7-Dimethyl-2,6-octadiensäurenitril; 3,7-Dimethyl-6-octensäurenitril;

**Aliphatische Carbonsäuren und deren Ester,** wie z. B. (*E*)- und (*Z*)-3-Hexenylformiat; Ethylacetoacetat; Isoamylacetat; Hexylacetat; 3,5,5-Trimethylhexylacetat; 3-Methyl-2-butenylacetat; (*E*)-2-Hexenylacetat; (*E*)- und (*Z*)-3-Hexenylacetat; Octylacetat; 3-Octylacetat; 1-Octen-3-ylacetat; Ethylbutyrat; Butylbutyrat; Isoamylbutyrat; Hexylbutyrat; (*E*)- und (*Z*)-3-Hexenylisobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(*E,Z*)-2,4-decadienoat; Methyl-2-octinat; Methyl-2-noninat; Allyl-2-isoamyloxyacetat; Methyl-3,7-dimethyl-2,6-octadienoat;

**Acyclische Terpenalkohole,** wie z. B. Citronellol; Geraniol; Nerol; Linalool; Lavadulol; Nerolidol; Farnesol; Tetrahydrolinalool; Tetrahydrogeraniol; 2,6-Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol; 2,6-Dimethyl-2,5,7-octatrien-l-ol; sowie deren Formiate, Acetate, Propionate, Isobutyrate, Butyrate, Isovalerianate, Pentanoate, Hexanoate, Crotonate, Tiglinate, 3-Methyl-2-butenoate;

**Acyclische Terpenaldehyde und -ketone,** wie z. B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;

**Cyclische Terpenalkohole,** wie z. B. Menthol; Isopulegol; a-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;

**Cyclische Terpenaldehyde und -ketone,** wie z. B. Menthon; Isomenthon; 8-Mercaptomenthan-3-on; Carvon; Campher; Fenchon; a-Ionon; beta -Ionon; a-n-Methylionon; beta -n-Methylionon; a-Isomethylionon; beta -Isomethylionon; a-Iron; a-Damascon; beta -Damascon; beta -Damascenon; ?-Damascon; d-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; a-Sinensal; beta - Sinensal; acetyliertes Cedernholzöl (Methylcedrylketon);

**Cyclische Alkohole,** wie z. B. 4-*tert*-Butylcyclohexanol; 3,3,5-Trimethylcyclohexanol; 3-Isocamphylcyclohexanol; 2,6,9-Trimethyl-(*Z*2,*Z*5,*E*9)-cyclododecatrien-1-ol; 2-Isobutyl-4-methyltetrahydro-2*H*-pyran-4-ol; aus der Gruppe der cycloaliphatischen Alkohole wie z. B. a,3,3-Trimethyl-cyclohexylmethanol; 2-Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;

**Cyclische und cycloaliphatische Ether,** wie z. B. Cineol; Cedrylmethylether; Cyclododecylmethylether; (Ethoxymethoxy)cyclododecan; a-Cedrenepoxid; 3a,6,6,9a-Tetramethyldodecahydronaphtho[2,1-b]furan; 3a-Ethyl-6,6,9a-trimethyl-dodecahydronaphtho[2,1-b]furan; 1,5,9-Trimethyl-13-oxabicyclo[10.1.0]trideca-4,8-dien; Rosenoxid; 2-(2,4-Dimethyl-3-cyclohexen-1-yl)-5-methyl-5-(1-methylpropyl)-1,3-dioxan;

**Cyclische Ketone,** wie z. B. 4-*tert*-Butylcyclohexanon; 2,2,5-Trimethyl-5-pentylcyclopentanon; 2-Heptylcyclopentanon; 2-Pentylcyclopentanon; 2-Hydroxy-3-methyl-2-cyclopenten-1-on; 3-Methyl-cis-2-penten-1-yl-2-cyclopenten-1-on; 3-Methyl-2-pentyl-2-cyclopenten-l-on; 3-Methyl-4-cyclopentadecenon; 3-Methyl-5-cyclopentadecenon; 3-Methylcyclopentadecanon; 4-(1-Ethoxyvinyl)-3,3,5,5-tetramethylcyclohexanon; *4-tert*-Pentylcyclohexanon; 5-Cyclohexadecen-1-on; 6,7-Dihydro-1,1,2,3,3-pentamethyl-4(5*H*)-indanon; 9-Cycloheptadecen-1-on; Cyclopentadecanon; Cyclohexadecanon;

**Cycloaliphatische Aldehyde,** wie z. B. 2,4-Dimethyl-3-cyclohexencarbaldehyd; 2-Methyl-4-(2,2,6-trimethyl-cyclohexen-1-yl)-2-butenal; 4-(4-Hydroxy-4-methylpentyl)-3-cyclohexencarbaldehyd; 4-(4-Methyl-3-penten-1-yl)-3-cyclohexencarbaldehyd;

**Cycloaliphatische Ketone,** wie z. B. 1-(3,3-Dimethylcyclohexyl)-4-penten-1-on; 1-(5,5-Dimethyl-1-cyclohexen-1-yl)-4-penten-1-on; 2,3,8,8-Tetramethyl-1,2,3,4,5,6,7,8-octahydro-2-naphtalenylmethylketon; Methyl-2,6,10-trimethyl-2,5,9-cyclododecatrienylketon; *tert*-Butyl-(2,4-dimethyl-3-cyclohexen-1-yl)keton;

**Ester cyclischer Alkohole,** wie z. B. 2-*tert*-Butylcyclohexylacetat; 4-*tert*-Butylcyclohexylacetat; 2-*tert*-Pentylcyclohexylacetat; 4-*tert*-Pentylcyclohexylacetat; Decahydro-2-naphthylacetat; 3-Pentyltetrahydro-2*H*-pyran-4-ylacetat; Decahydro-2,5,5,8a-tetramethyl-2-naphthylacetat; 4,7-Methano-3a,4,5,6,7,7a-hexahydro-5- bzw. -6-indenylacetat; 4,7-Methano-3a,4,5,6,7,7a-hexahydro-5- bzw. -6-indenylpropionat; 4,7-Methano-3a,4,5,6,7,7a-hexahydro-5- bzw. -6-indenylisobutyrat; 4,7-Methanooctahydro-5- bzw. -6-indenylacetat;

**Ester cycloaliphatischer Carbonsäuren,** wie z. B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;
**Aromatische Kohlenwasserstoffe,** wie z. B. Styrol und Diphenylmethan;
**Araliphatische Alkohole,** wie z. B. Benzylalkohol; 1-Phenylethylalkohol; 2-Phenylethylalkohol; 3-Phenylpropanol; 2-Phenylpropanol; 2-Phenoxyethanol; 2,2-Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;
**Ester von araliphatischen Alkoholen und aliphatischen Carbonsäuren,** wie z. B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; a-Trichlormethylbenzylacetat; a,a-Dimethylphenylethylacetat; a,a-Dimethylphenylethylbutyrat; Cinnamylacetat; 2-Phenoxyethylisobutyrat; 4-Methoxybenzylacetat;
**Araliphatischen Ether,** wie z. B. 2-Phenylethylmethylether; 2-Phenylethylisoamylether; 2-Phenylethyl-1-ethoxyethylether; Phenylacetaldehyddimethylacetal; Phenylacetaldehyd-diethylacetal; Hydratropaaldehyd-dimethylacetal; Phenylacetaldehyd-glycerinacetal; 2,4,6-Trimethyl-4-phenyl-1,3-dioxane; 4,4a,5,9b-Tetrahydroindeno[1,2-d]-m-dioxin; 4,4a,5,9b-Tetrahydro-2,4-dimethylindeno[1,2-d]-m-dioxin;
**Aromatische und araliphatische Aldehyde,** wie z. B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)-propanal; 2-Methyl-3-(4-*tert*-butylphenyl)propanal; 3-(4-*tert*-Butylphenyl)propanal; Zimtaldehyd; a-Butylzimtaldehyd; a-Amylzimtaldehyd; a-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4-Methylendioxybenzaldehyd; 3,4-Dimethoxybenzaldehyd; 2-Methyl-3-(4-methoxyphenyl)propanal; 2-Methyl-3-(4-methylendioxyphenyl)propanal;
**Aromatische und araliphatische Ketone,** wie z. B. Acetophenon; 4-Methylacetophenon; 4-Methoxyacetophenon; 4-*tert*-Butyl-2,6-dimethylacetophenon; 4-Phenyl-2-butanon; 4-(4-Hydroxyphenyl)-2-butanon; 1-(2-Naphthalenyl)ethanon; Benzophenon; 1,1,2,3,3,6-Hexamethyl-5-indanylmethylketon; 6-*tert*-Butyl-1,1-dimethyl-4-indanylmethylketon; 1-[2,3-dihydro-1,1,2,6-tetramethyl-3-(1-methylethyl)-1H-5-indenyl]ethanon; 5',6',7',8'-Tetrahydro-3',5',5',6',8',8'-hexamethyl-2-acetonaphthon;
**Aromatische und araliphatische Carbonsäuren und deren Ester,** wie z. B. Benzoesäure; Phenylessigsäure; Methylbenzoat; Ethylbenzoat; Hexylbenzoat; Benzylbenzoat; Methylphenylacetat; Ethylphenylacetat; Geranylphenylacetat; Phenylethyl-phenylacetat; Methylcinnamat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; *cis*-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;
**Stickstoffhaltige aromatische Verbindungen,** wie z. B. 2,4,6-Trinitro-1,3-dimethyl-5-*tert*-butylbenzol; 3,5-Dinitro-2,6-dimethyl-4-*tert*-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-*tert*-butylphenyl)propanal oder 2,4-Dimethyl-3-cyclohexencarbaldehyd; 6-Isopropylchinolin; 6-Isobutylchinolin; 6-*sec*-Butylchinolin; Indol; Skatol; 2-Methoxy-3-isopropylpyrazin; 2-Isobutyl-3-methoxypyrazin; 4-(4,8-Dimethyl-3,7-nonadienyl)-pyridin;
**Phenole, Phenylether und Phenylester,** wie z. B. Estragol; Anethol; Eugenol; Eugenylmethylether; Isöugenol; Isöugenylmethylether; Thymol; Carvacrol; Diphenylether; beta-Naphthylmethylether; beta -Naphthylethylether; beta -Naphthylisobutylether; 1,4-Dimethoxybenzol; Eugenylacetat; 2-Methoxy-4-methylphenol; 2-Ethoxy-5-(1-propenyl)phenol; p-Kresylphenylacetat; aus der Gruppe der heterocyclischen Verbindungen wie z. B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2-Ethyl-3-hydroxy-4H-pyran-4-on;
**Lactone,** wie z. B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

**Biogene Prinzipien**

Unter biogenen Prinzipien sind Wirkstoffe mit biologischer Aktivität zu verstehen, beispielsweise Tocopherol, Tocopherolacetat, Tocopherolpalmitat, Ascorbinsäure, Carnotin, Carnosin, Koffein, (Desoxy)Ribonucleinsäure und deren Fragmentierungsprodukte, β-Glucane, Retinol, Bisabolol, Allantoin, Phytantriol, Panthenol, AHA-Säuren, Aminosäuren, Ceramide, Pseudoceramide, essentielle Öle, Pflanzenextrakte, sowie Vitaminkomplexe zu verstehen.

## DIOLE

Die 1,2-Diole, die erfindungsgemäß bei der Emulsionsbildung mitverwendet werden, stabilisieren die Emulsion und begünstigen dabei die Bildung vergleichsweise kleinerer Tröpfen und damit auch entsprechender Mikrokapseln und ähneln dabei in ihrem Verhalten Schutzkolloiden.
Bei den 1,2-Diolen kann es sich um 1,2-Pentandiol, 1,2-Hexandiol, 1,2-Octandiol, 1,2-Decandiol, 1,2-Dodecandiol sowie beliebigen Mischungen von zwei, drei oder mehreren dieser Stoffe handeln. Vorzugsweise wird eine Mischung von 1,2-Hexandiol und 1,2-Octandiol eingesetzt (SymDeo® 68, Symrise AG); alternativ kann eine oder beide Komponenten vollständig oder anteilig durch 1,2-Pentandiol (Hydrolite® 5) ersetzt werden.
Vorzugsweise setzt man die Diole den Emulsionen in einer Menge von etwa 1 bis etwa 10 Gew.-%, vorzugsweise etwa 2 bis etwa 5 Gew.-% - jeweils bezogen auf die Emulsion - zu.

## EMULGATOREN

Im Sinne des erfindungsgemäßen Verfahrens werden Emulgatoren, vorzugsweise W/O-Emulgatoren benötigt, die eine homogene Verteilung der Öltröpfchen in der wässrigen Phase ermöglichen.
Als Emulgatoren kommen beispielsweise nichtionogene Tenside aus mindestens einer der folgenden Gruppen in Frage:

- Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
- Alkyl- und/oder Alkenyloligoglykoside mit 8 bis 22 Kohlenstoffatomen im Alk(en)ylrest und deren ethoxylierte Analoga;
- Anlagerungsprodukte von 1 bis 15 Mol Ethylenoxid an Ricinusöl und/oder gehärtetes Ricinusöl;
- Anlagerungsprodukte von 15 bis 60 Mol Ethylenoxid an Ricinusöl und/oder gehärtetes Ricinusöl;
- Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.
- Mono-, Di- und Trialkylphosphate sowie Mono-, Di- und/oder Tri-PEG-alkylphosphate und deren Salze;
- Wollwachsalkohole;
- Polysiloxan-Polyalkyl-Polyether-Copolymere bzw. entsprechende Derivate;
- Block-Copolymere z.B. Polyethylenglycol-30 Dipolyhydroxystearate;
- Polymeremulgatoren, z.B. Pemulen-Typen (TR-1,TR-2) von Goodrich oder Cosmedia® SP von Cognis;
- Polyalkylenglycole sowie
- Glycerincarbonat.

Im Folgenden werden besonders geeignete Emulgatoren näher erläutert:

**Alkoxylate.** Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. $C_{12/18}$-Fettsäuremono- und -diester von Anlagerungsprodukten von Ethylenoxid an Glycerin sind als Rückfettungsmittel für kosmetische Zubereitungen bekannt.

**Alkyl- und/oder Alkenyloligoglykosid.** Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

**Partialglyceride.** Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

**Sorbitanester.** Als Sorbitanester kommen Sorbitanmonoisostearat, Sorbitansesquiisostearat, Sorbitan-diisostearat, Sorbitantriisostearat, Sorbitanmonooleat, Sorbitansesquioleat, Sorbitan-dioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesqui-tartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitan-dimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

**Polyglycerinester.** Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

**Anionische Emulgatoren.** Typische anionische Emulgatoren sind aliphatische Fettsäuren mit 12 bis 22 Kohlenstoffatomen, wie beispielsweise Palmitinsäure, Stearinsäure oder Behensäure, sowie Dicarbonsäuren mit 12 bis 22 Kohlenstoffatomen, wie beispielsweise Azelainsäure oder Sebacinsäure.

**Amphotere und kationische Emulgatoren.** Weiterhin können als Emulgatoren zwitterionische Tenside verwendet werden. Als zwitterionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Besonders geeignete zwitterionische Tenside sind die sogenannten Betaine wie die N-Alkyl-N,N-dimethylammoniumglycinate, beispielsweise das Kokosalkyldimethylammoniumglycinat, N-Acylaminopropyl-N,N-dimethylammoniumglycinate, beispielsweise das Kokosacylaminopropyldimethyl-ammoniumglycinat, und 2-Alkyl-3-carboxylmethyl-3-hydroxyethylimidazoline mit jeweils 8 bis 18 C-Atomen in der Alkyl- oder Acylgruppe sowie das Kokosacylaminoethylhydroxyethylcarboxymethylglycinat. Besonders bevorzugt ist das unter der CTFA-Bezeichnung Cocamidopropyl Betaine bekannte Fettsäureamid-Derivat. Ebenfalls geeignete Emulgatoren sind ampholytische Tenside. Unter ampholytischen Tensiden werden solche oberflächenaktiven Verbindungen verstanden, die außer einer $C_{8/18}$-Alkyl- oder Acylgruppe im Molekül mindestens eine freie Aminogruppe und mindestens eine

-COOH- oder -$SO_3H$-Gruppe enthalten und zur Ausbildung innerer Salze befähigt sind. Beispiele für geeignete ampholytische Tenside sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 18 C-Atomen in der Alkylgruppe.. Besonders bevorzugte ampholytische Tenside sind das N-Kokosalkylaminopropionat, das Kokosacylaminoethylaminopropionat und das $C_{12/18}$-Acylsarcosin. Schließlich kommen auch Kationtenside als Emulgatoren in Betracht, wobei solche vom Typ der Esterquats, vorzugsweise methylquaternierte Difettsäuretriethanolaminester-Salze, besonders bevorzugt sind.

Die Emulgatoren können in Mengen von etwa 0,5 bis etwa 10 Gew.-% und vorzugsweise etwa 1 bis etwa 5 Gew.-% - jeweils bezogen auf die Emulsion - zugesetzt werden.

## STABILISATOREN UND SCHUTZKOLLOIDE

Vorzugsweise enthalten die Emulsionen zudem Stabilisatoren oder Schutzkolloide. Geeignete Beispiel umfassen vor allem Acrylcopolymere, die über Sulfonatgruppen verfügen, wie beispielsweise LUPASOL® PA140 oder LUPASOL® VFR (BASF). Ebenfalls geeignet sind Copolymere von Acrylamiden und Acrylsäure, Copolymere von Alkylacrylaten und N-Vinylpyrrolidon wie beispielsweise LUVISKOL® K15, K30 oder K90 (BASF); Natriumpolycarboxylate, Natriumpolystyrolsulfonate, Vinyl- und Methylvinylether-Maleinsäureanhydrid Copolymere sowie Ethylen-, Isobutylen- oder Styrol-Maleinsäureanhydrid-Copolymere.

Die bevorzugten Stabilisatoren sind die oben genannten Vertreter der LUPASOL®-Reihe, insbesondere in Kombination mit AFP vom LURACOLL®-Typ.

Die Einsatzmenge der Stabilisatoren kann im Bereich von etwa 1 bis etwa 10 Gew.-% und insbesondere etwa 2 bis etwa 5 Gew.-% - bezogen auf die Emulsion - liegen.

## DURCHFÜHRUNG DES VERFAHRENS

Ein Kennzeichen des erfindungsgemäßen Verfahrens ist es, dass die ganze Reaktionssequenz unter intensivem Rühren durchgeführt wird.

Im Sinne des erfindungsgemäßen Verfahrens wird als erstes eine wässrige Emulsion hergestellt, die das Amin-Formaldehyd-Prekondensat, den Wirkstoff sowie die Diol-Komponente und gegebenenfalls Emulgatoren und/oder Stabilisatoren enthalten. Diese Komponenten werden intensiv gemischt, wobei der Anteil des Wassers an der Mischung etwa 50 bis 60 Gew.-% ausmacht und die Beladung mit dem Wirkstoff, also beispielsweise dem Parfümöl 30 bis 40 Gew.-%. Diole, Emulgatoren und Stabilisatoren werden in den oben angegebenen Mengen eingesetzt. Die Emulsionsbildung erfolgt bis hierhin bei Raumtemperatur bzw. leicht erhöhter Temperatur (Maximum 35 °C) und unter starker Scherung.

Die Polykondensation wird durch einen pH-Wert-Wechsel ausgelöst. Hierzu wird der Lösung eine Säure, beispielsweise Ameisensäure oder Essigsäure zugesetzt und ein pH von etwa 1,0 bis 4,0 vorzugsweise von etwa 3,0 bis 3,5 eingestellt. Gleichzeitig wird die Rührleistung zurückgenommen, beispielsweise auf etwa 600 bis 900 Upm, um die sich bildenden Kapseln nicht gleich wieder zu zerschlagen. Die Polykondensate lagern sich auf den fein verteilten Öltröpfchen ab und beginnen diese einzuschließen. Am Ende hat sich die Emulsion in eine Mikrokapseldispersion umgewandelt.

Nach dem Ende der Polykondensation müssen die noch weichen Kapseln in der Dispersion aushärten, indem die Bestandteile der Kapselhülle vernetzen. Dies wird durch eine Temperaturänderung ausgelöst, indem man diese schrittweise auf 50 bis 70 °C anhebt. Zusätzlich empfiehlt es sich, der Lösung weiteres Melamin zuzusetzen, das in die Hülle eingebaut werden kann und sie verstärkt.

Die Dispersion kann abgespaltenes und nicht-abreagiertes Formaldehyd enthalten, was für die weitere Verwendung, bei der Kontakt zur menschlichen Haut besteht, nicht akzeptabel ist. Abschließend wird der Dispersion eine geringe Menge eines Formaldehydfängers, beispielsweise ein Amin und insbesondere Harnstoff zugegeben.

Die wässrige Dispersion kann getrocknet werden, üblich ist hingegen sie auf einen alkalischen pH-Wert einzustellen und mit einem Verdickungsmittel zu beaufschlagen, welches eine homogene Verteilung der Kapseln in der Dispersion unterstützt und der Sedimentation entgegenwirkt.

## GEWERBLICHE ANWENDBARKEIT

Ein weiterer Gegenstand der Erfindung betrifft die Verwendung von 1,2-Diolen ausgewählt sind aus der Gruppe, die gebildet wird on 1,2-Pentandiol, 1,2-Hexandiol, 1,2-Octandiol, 1,2-Decandiol, 1,2-Dodecandiol sowie beliebigen Mischungen von zwei, drei oder mehreren dieser Stoffe als Additive zur Regulierung der Teilchengrösse in der Herstellung von Mikrokapseln und speziell die Verwendung als Additive zur Regulierung der Teilchengröße in der Herstellung von

Mikrokapseln nach dem oben geschilderten erfindungsgemäßen Verfahren.

Bezüglich der bevorzugten 1,2-Diole und deren Einsatzmengen wird auf die obigen Ausführungen verwiesen, die hier mitgelten, so dass sich eine Wiederholung erübrigt.

## BEISPIELE

### BEISPIEL 1

In einem 1-l-Dreihalskolben mit Intensivrührer, Thermometer und Tropftrichter wurde zunächst
24 g Stabilisator (Lupasol® PA140, 20 Gew.-%ig in Wasser, BASF),
27 g Methoxy-methyloliertes Melamin-Formaldehyd-Prekondensat (Luracoll® SD, 70 Gew.-%ig in Wasser, BASF),
4 g einer 1:1 Mischung von 1,2-Hexandiol und 1,2-Octadiol (SymDiol® 68, Symrise) sowie 160 g VE-Wasser
vorgelegt. Die Lösung wurde allmählich auf 35 °C erwärmt und mit einer Geschwindigkeit von 850 Upm gerührt. Anschließend wurden über den Tropftrichter portionsweise 180 g eines wasserunlöslichen Parfümöls (TomCap) zugegeben, bis sich eine O/W-Emulsion gebildet hatte. Um die Polykondensation des Melamin-Formaldehyd-Prekondensats und die Abscheidung des Polymers auf den Parfümöltröpfchen in der Emulsion auszulösen, wurde der Lösung 8 g 10 Gew.-%ige Ameisensäure zugegeben, wobei sich ein pH-Wert von 3,5 einstellte. Die Lösung wurde bei der eingestellten Temperatur etwa 30 Minuten weiter gerührt.

Im Zuge der Polykondensation schieden sich die noch mit einer elastischen Hülle versehenen Mikrokapseln ab und wurden durch beständiges Rühren in der wässrigen Phase dispergiert. Um die Kapseln zu härten wurden die Bestandteile der Kapselhülle vernetzt. Dies erfolgte durch allmähliches Anheben der Reaktionstemperatur von 35°C auf 60 °C innerhalb eines Zeitraums von etwa 30 Minuten, die Rührgeschwindigkeit wurde dabei auf 1.000 Upm gesteigert. Gegen Ende wurden 33 g einer Melamin-Dispersion hinzugegeben, was zu einer weiteren Verfestigung der Hülle führte. Daraufhin wurde die Dispersion weitere 4 Stunden gerührt. Anschließend wurden 35 g einer 40 Gew.-%igen wässrigen Harnstofflösung hinzugefügt, um abgespaltetes Formaldehyd abzufangen und eine weitere Stunden bei geringerer Drehzahl weiter gerührt.

Die resultierende Kapseldispersion wurde mit NaOH auf einen pH-Wert von etwa 8 eingestellt und durch Zugabe eines kationischen polymeren Verdickungsmittels stabilisiert, so dass sich die Kapseln nicht absetzten. Der Ölgehalt der Kapseln betrug 35,8 Gew.-%.

**Abbildung 4** zeigt eine Mikrofotografie der wässrigen Mikrokapseldispersion, **Abbildung 5** die gleiche Dispersion, die jedoch ohne Zusatz der 1,2-Diole erhalten wurde. Man erkennt, dass die erfindungsgemäße Dispersion wesentlich kleinere Teilchen und weniger Polymergries enthält.

### BEISPIEL 2

Das Muster aus Beispiel 1 wurde einem Sterilitätstest gemäß Europäischem Arzneibuch 2011; 5.1.3 (= DAB VIII.14) unterzogen. Nach der Inokulierung wurde die Keimzahlbestimmung im Abstand von 2, 7, 14 und 28 Tagen durchgeführt. Die Ergebnisse sind in Tabelle 1 zusammengefasst:

**Tabelle 1**

| Koloniebildende Einheiten/g Produkt nach Inokulation mit: | | | | | |
|---|---|---|---|---|---|
| **Inkubationszeit (d)** | ***Staphyllococcus aureus*** | ***Pseudomonas aeruginosa*** | ***Escherichia coli*** | ***Candida albicans*** | ***Aspergillus brasilensis*** |
| 0 | 3,4E+05 | 5,3E+05 | 4,2E+05 | 4,3E+05 | 4,3E+05 |
| 2 | < 10 | < 10 | < 10 | < 10 | < 10 |
| 7 | < 10 | < 10 | < 10 | < 10 | < 10 |
| 14 | < 10 | < 10 | < 10 | < 10 | < 10 |
| 28 | < 10 | < 10 | < 10 | < 10 | < 10 |

Die Reduktion aller Testkeime erfüllte die A-Kriterien (empfohlene Wirksamkeit) der Anforderungen des Europäischen Arzneibuchs für Zubereitungen zur kutanen Anwendung.

## Patentansprüche

1. Verfahren zur Herstellung von Mikrokapseln, umfassend die folgenden Schritte:

   (a) Bereitstellung einer ersten wässrigen Zubereitung enthaltend mindestens ein PrePolymer;
   (b) Bereitstellen einer zweiten nicht-wässrigen Zubereitung enthaltend den zu verkapselnden Wirkstoff;
   (c) Vermischen der wässrigen und der nicht-wässrigen Phase in Gegenwart mindestens eines Emulgators und/oder Stabilisators unter Ausbildung einer Emulsion;
   (d) Polymerisieren des in der Emulsion aus Schritt (c) enthaltenen mindestens einen Pre-Polymers unter Erhalt einer Dispersion von Mikrokapseln, die den Wirkstoff einschließen;
   (e) Härten und Vernetzen der im Schritt (d) erhaltenen Mikrokapseln sowie gegebenenfalls
   (f) Abtrennen und Trocknen der Mikrokapseln aus der Dispersion,

   **dadurch gekennzeichnet, dass** die Bildung der Emulsion in Schritt (c) in Gegenwart von mindestens einem 1,2-Diol erfolgt.

2. Verfahren nach Anspruch 1, **dadurch gekennzeichnet, dass** man Pre-Polymere einsetzt, die ausgewählt sind aus der Gruppe, die gebildet wird von gegebenenfalls alkylierten Mono- und Polymethylol-Harnstoff- oder Mono- und Polymethylol-Melamin-Prekondensaten, partiell methylierten Mono- und Polymethylol-1,3,5-triamino-2,4,6-triazin-Prekondensaten, Mono- und Polyalkylolbenzoguanamin- sowie Mono- und Polyalkylolglycuril-Prekondensaten, Poly[N-(2,2-dimethoxy-1-hydroxy)]-polyaminen, Dialdehyde sowie Resorcin und deren Mischungen.

3. Verfahren nach den Ansprüchen 1 und/oder 2, **dadurch gekennzeichnet, dass** man als zu verkapselnden Wirkstoff mindestens ein Aroma, mindestens einen Duftstoff oder mindestens ein biogenes Prinzip einsetzt.

4. Verfahren nach mindestens einem der Ansprüche 1 bis 3, **dadurch gekennzeichnet, dass** man als Emulgatoren 1,2-Diole einsetzt, die ausgewählt sind aus der Gruppe, die gebildet wird on 1,2-Pentandiol, 1,2-Hexandiol, 1,2-Octandiol, 1,2-Decandiol, 1,2-Dodecandiol sowie beliebigen Mischungen von zwei, drei oder mehreren dieser Stoffe.

5. Verfahren nach Anspruch 4, **dadurch gekennzeichnet, dass** man als 1,2-Diol eine Mischung von 1,2-Hexandiol und 1,2-Octandiol einsetzt.

6. Verfahren nach mindestens einem der Ansprüche 1 bis 5, **dadurch gekennzeichnet, dass** man die Diole in Mengen von etwa 0,1 bis etwa 10 Gew.-% - bezogen auf die Emulsion einsetzt.

7. Verfahren nach mindestens einem der Ansprüche 1 bis 6, **dadurch gekennzeichnet, dass** man Stabilisatoren einsetzt, die ausgewählt sind aus der Gruppe, die gebildet wird von sulfonierten Acrylcopolymeren, Copolymeren von Acrylamiden und Acrylsäure, Copolymeren von Alkylacrylaten und N-Vinylpyrrolidon, Natriumpolycarboxylaten, Natriumpolystyrolsulfonaten, Vinyl- und Methylvinylether-Maleinsäureanhydrid Copolymeren sowie Ethylen-, Isobutylen- oder Styrol-Maleinsäureanhydrid-Copolymeren und deren Gemischen.

8. Verfahren nach mindestens einem der Ansprüche 1 bis 7, **dadurch gekennzeichnet, dass** man Emulgatoren und Stabilisatoren jeweils in einer Gesamtmenge von etwa 1 bis etwa 10 Gew.-% - bezogen auf die Emulsion - einsetzt.

9. Verfahren nach mindestens einem der Ansprüche 1 bis 8, **dadurch gekennzeichnet, dass** man die Polykondensation der Amin-Formaldehyd-Prekondensate auslöst, indem man den pH-Wert der Emulsion auf etwa 1.0 bis etwa 5,8 einstellt.

10. Verfahren nach mindestens einem der Ansprüche 1 bis 9, **dadurch gekennzeichnet, dass** man die Mikrokapseln härtet bzw. vernetzt, indem man die Temperatur der Dispersion auf etwa 50 bis etwa 90°C einstellt. (Der Temperaturbereich hat den Effekt das mehr Kapseln den Herstellungsprozess überstehen und weniger Kapseln zerstört werden.

11. Verfahren nach mindestens einem der Ansprüche 1 bis 9, **dadurch gekennzeichnet, dass** man die Mikrokapseln härtet, indem man der Dispersion Melamin zusetzt.

12. Verfahren nach mindestens einem der Ansprüche 1 bis 7, **dadurch gekennzeichnet, dass** man die gesamte Reaktion unter intensivem Rühren durchführt.

**13.** Verfahren nach mindestens einem der Ansprüche 1 bis 7, **dadurch gekennzeichnet, dass** man der Dispersion nach der Härtung der Kapseln einen Formaldehydfänger zusetzt.

**14.** Verwendung von 1,2-Diolen, die ausgewählt sind aus der Gruppe, die gebildet wird von 1,2-Pentandiol, 1,2-Hexandiol, 1,2-Octandiol, 1,2-Decandiol, 1,2-Dodecandiol sowie beliebigen Mischungen von zwei, drei oder mehreren dieser Stoffe als Additive zur Regulierung der Teilchengröße in der Herstellung von Mikrokapseln.

**15.** Verwendung von 1,2-Diolen als Additive zur Regulierung der Teilchengröße in der Herstellung von Mikrokapseln nach einem Verfahren gemäß Anspruch 1.

## Claims

**1.** A process for preparing microcapsules comprising the following steps:

(a) providing a first aqueous preparation containing at least one prepolymer;
(b) providing a second non-aqueous preparation containing the active ingredient to be encapsulated;
(c) mixing the aqueous and non-aqueous phases in the presence of at least one emulsifier and/or stabilizer to form an emulsion;
(d) polymerizing the at least one prepolymer contained in the emulsion from step (c) to obtain a dispersion of microcapsules enclosing the active ingredient;
(e) curing and crosslinking the microcapsules obtained in step (d), and optionally
(f) separation and drying of the microcapsules from the dispersion,

**characterized in that** the emulsion is formed in step (c) in the presence of at least one 1,2-diol.

**2.** The process according to claim 1, which comprises using prepolymers selected from the group consisting of optionally alkylated mono- and polymethylol urea or mono- and polymethylol melamine precondensates, partially methylated mono- and polymethylol-1,3,5-triamino-2,4,6-triazine precondensates, mono- and polyalkylolbenzoguanamine and mono- and polyalkylolglycuril precondensates, poly[N-(2,2-dimethoxy-1-hydroxy)]-polyamines, dialdehydes and resorcinol and mixtures thereof.

**3.** The process according to claims 1 and/or 2, **characterized in that** at least one aroma, at least one fragrance or at least one biogenic principle is used as the active ingredient to be encapsulated.

**4.** The process according to at least one of Claims 1 to 3, which comprises using as emulsifiers 1,2-diols selected from the group consisting of 1,2-pentanediol, 1,2-hexanediol, 1,2-octanediol, 1,2-decanediol, 1,2-dodecanediol and any mixtures of two, three or more of these substances.

**5.** The process according to claim 4, **characterized in that** the 1,2-diol used is a mixture of 1,2-hexanediol and 1,2-octanediol.

**6.** The process according to at least one of Claims 1 to 5, **characterized in that** the diols are used in quantities of about 0.1 to about 10% by weight, based on the emulsion.

**7.** The process according to at least one of Claims 1 to 6, which comprises using stabilizers selected from the group consisting of sulfonated acrylic copolymers, copolymers of acrylamides and acrylic acid, Copolymers of alkyl acrylates and N-vinylpyrrolidone, sodium polycarboxylates, sodium polystyrene sulfonates, vinyl and methyl vinyl ether maleic anhydride copolymers and ethylene, isobutylene or styrene-maleic anhydride copolymers and mixtures thereof.

**8.** The process according to at least one of Claims 1 to 7, which comprises using emulsifiers and stabilizers in a total amount of from about 1 to about 10 % by weight, based on the emulsion, of each emulsifier and stabilizer.

**9.** The process according to at least one of Claims 1 to 8, **characterized in that** the polycondensation of the amine-formaldehyde precondensates is initiated by adjusting the pH of the emulsion to about 1.0 to about 5.8.

**10.** The process according to at least one of Claims 1 to 9, **characterized in that** the microcapsules are hardened or crosslinked by adjusting the temperature of the dispersion to about 50 to about 90°C. (The temperature range has

the effect that more capsules survive the manufacturing process and fewer capsules are destroyed.

**11.** The process according to at least one of claims 1 to 9, **characterized in that** the microcapsules are hardened by adding melamine to the dispersion.

**12.** The process according to at least one of Claims 1 to 7, **characterized in that** the entire reaction is carried out with intensive stirring.

**13.** The process according to at least one of Claims 1 to 7, **characterized in that** a formaldehyde scavenger is added to the dispersion after the capsules have been cured.

**14.** Use of 1,2-diols selected from the group formed by 1,2-pentanediol, 1,2-hexanediol, 1,2-octanediol, 1,2-decanediol, 1,2-dodecanediol and any mixtures of two, three or more of these substances as additives for regulating the particle size in the manufacture of microcapsules.

**15.** The use of 1,2-diols as additives for regulating particle size in the manufacture of microcapsules according to a process according to claim 1.

**Revendications**

**1.** Procédé de fabrication de microcapsules, comprenant les étapes suivantes :

(a) la préparation d'une première préparation aqueuse contenant au moins un prépolymère ;
(b) la préparation d'une deuxième préparation non aqueuse contenant l'agent actif à encapsuler ;
(c) le mélange de la phase aqueuse et de la phase non aqueuse en présence d'au moins un émulsifiant et/ou un stabilisateur pour former une émulsion ;
(d) la polymérisation dudit au moins un prépolymère contenu dans l'émulsion de l'étape (c) pour obtenir une dispersion de microcapsules qui renferment l'agent actif ;
(e) le durcissement et la réticulation des microcapsules obtenues à l'étape (d), et éventuellement
(f) la séparation et le séchage des microcapsules à partir de la dispersion,

**caractérisé en ce que** la formation de l'émulsion à l'étape (c) a lieu en présence d'au moins un 1,2-diol.

**2.** Procédé selon la revendication 1, **caractérisé en ce que** des prépolymères qui sont choisis dans le groupe formé par les précondensats de mono- et polyméthylol-urée ou mono- et polyméthylol-mélamine éventuellement alkylés, les précondensats de mono- et polyméthylol--1,3,5-triamino-2,4,6-triazine partiellement méthylés, les précondensats de mono- et polyalkylolbenzoguanamine, ainsi que de mono- et polyalkylolglycurile, les poly[N-(2,2-diméthoxy-1-hydroxy)]-polyamines, les dialdéhydes, ainsi que la résorcine et leurs mélanges, sont utilisés.

**3.** Procédé selon les revendications 1 et/ou 2, **caractérisé en ce qu'**au moins un arôme, au moins un parfum ou au moins un principe biogène est utilisé en tant qu'agent actif à encapsuler.

**4.** Procédé selon au moins l'une quelconque des revendications 1 à 3, **caractérisé en ce que** des 1,2-diols sont utilisés en tant qu'émulsifiants, qui sont choisis dans le groupe formé par le 1,2-pentanediol, le 1,2-hexanediol, le 1,2-octanediol, le 1,2-décanediol, le 1,2-dodécanediol, ainsi que les mélanges quelconques de deux, trois ou davantage de ces substances.

**5.** Procédé selon la revendication 4, **caractérisé en ce qu'**un mélange de 1,2-hexanediol et de 1,2-octanediol est utilisé en tant que 1,2-diol.

**6.** Procédé selon au moins l'une quelconque des revendications 1 à 5, **caractérisé en ce que** les diols sont utilisés en quantités d'environ 0,1 à environ 10 % en poids, par rapport à l'émulsion.

**7.** Procédé selon au moins l'une quelconque des revendications 1 à 6, **caractérisé en ce que** des stabilisateurs sont utilisés, qui sont choisis dans le groupe formé par les copolymères acryliques sulfonés, les copolymères d'acrylamides et d'acide acrylique, les copolymères d'acrylates d'alkyle et de N-vinylpyrrolidone, les polycarboxylates de sodium, les polystyrène-sulfonates de sodium, les copolymères d'éther de vinyle et de méthylvinyle-anhydride de

l’acide maléique, ainsi que les copolymères d’éthylène-, isobutylène- ou styrène-anhydride de l’acide maléique, et leurs mélanges.

**8.** Procédé selon au moins l’une quelconque des revendications 1 à 7, **caractérisé en ce que** les émulsifiants et les stabilisateurs sont chacun utilisés en une quantité totale d’environ 1 à environ 10 % en poids, par rapport à l’émulsion.

**9.** Procédé selon au moins l’une quelconque des revendications 1 à 8, **caractérisé en ce que** la polycondensation des précondensats d’amine-formaldéhyde est déclenchée par ajustement du pH de l’émulsion d’environ 1,0 à environ 5,8.

**10.** Procédé selon au moins l’une quelconque des revendications 1 à 9, **caractérisé en ce que** les microcapsules sont durcies ou réticulées par ajustement de la température de la dispersion d’environ 50 à environ 90 °C. (La plage de température a l’effet que davantage de capsules surmontent le processus de fabrication et moins de capsules sont détruites.

**11.** Procédé selon au moins l’une quelconque des revendications 1 à 9, **caractérisé en ce que** les microcapsules sont durcies par ajout de mélamine à la dispersion.

**12.** Procédé selon au moins l’une quelconque des revendications 1 à 7, **caractérisé en ce que** la réaction totale est réalisée sous agitation intensive.

**13.** Procédé selon au moins l’une quelconque des revendications 1 à 7, **caractérisé en ce qu’**un capteur de formaldéhyde est ajouté à la dispersion après le durcissement des capsules.

**14.** Utilisation de 1,2-diols, qui sont choisis dans le groupe formé par le 1,2-pentanediol, le 1,2-hexanediol, le 1,2-octanediol, le 1,2-décanediol, le 1,2-dodécanediol, ainsi que les mélanges quelconques de deux, trois ou davantage de ces substances, en tant qu’additifs pour la régulation de la taille de particules lors de la fabrication de microcapsules.

**15.** Utilisation de 1,2-diols en tant qu’additifs pour la régulation de la taille de particules lors de la fabrication de microcapsules par un procédé selon la revendication 1.

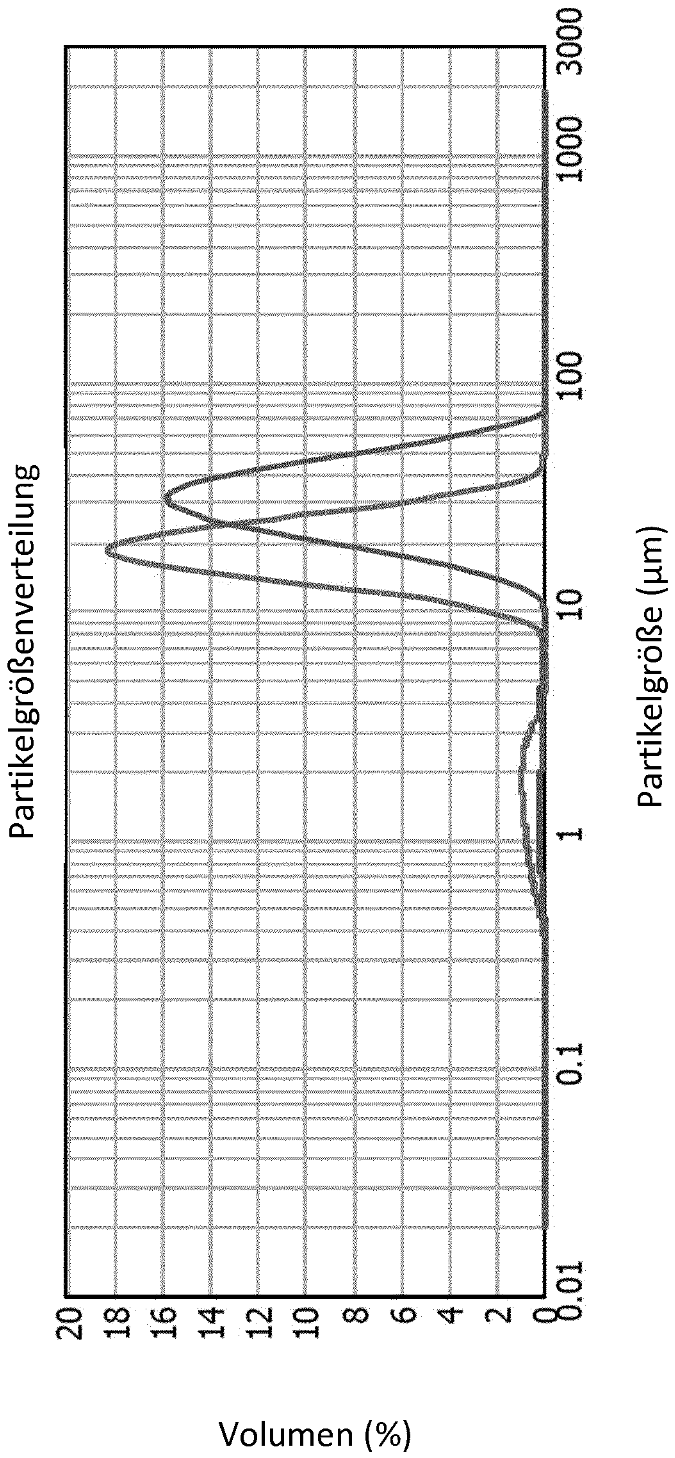
Partikelgrößenverteilung
Partikelgröße (µm)
0.01
0.1
1
10
100
1000
3000
20
18
16
14
12
10
8
6
4
2
0
Volumen (%)

**Abbildung 1**

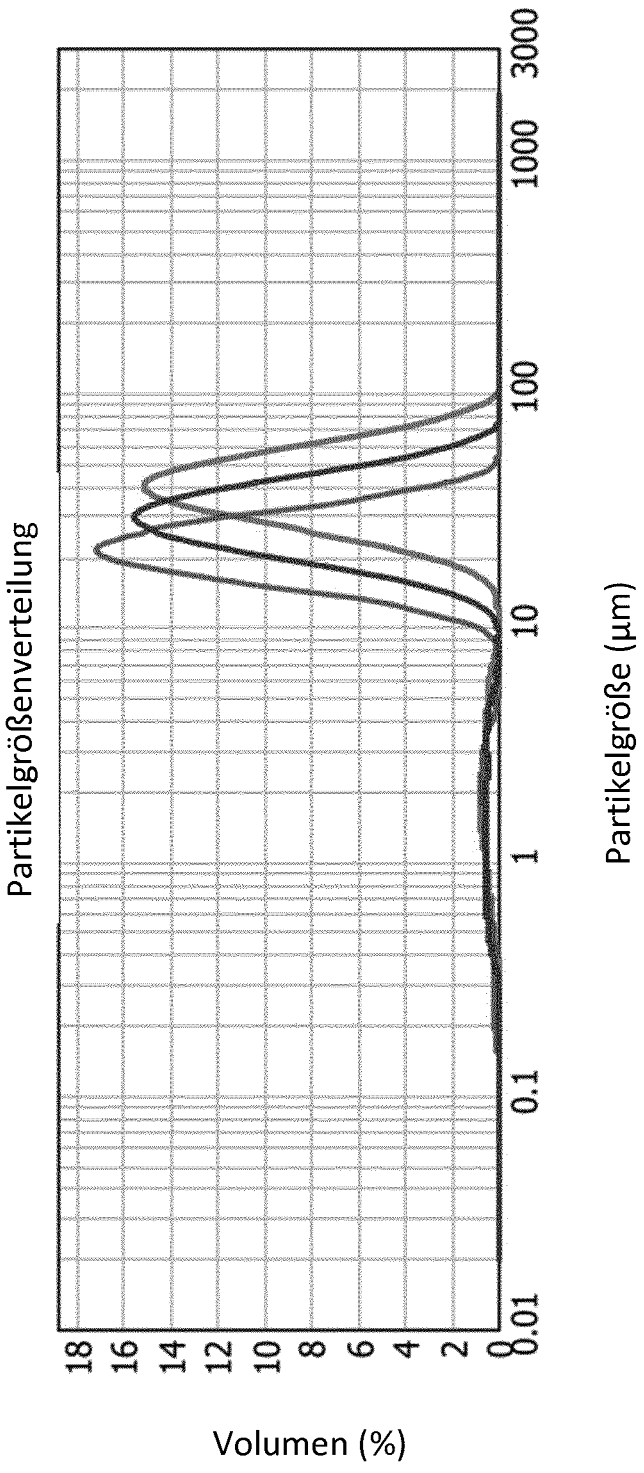
Partikelgrößenverteilung
Partikelgröße (µm)
Volumen (%)
0.01
0.1
1
10
100
1000
3000
0
2
4
6
8
10
12
14
16
18

**Abbildung 2**

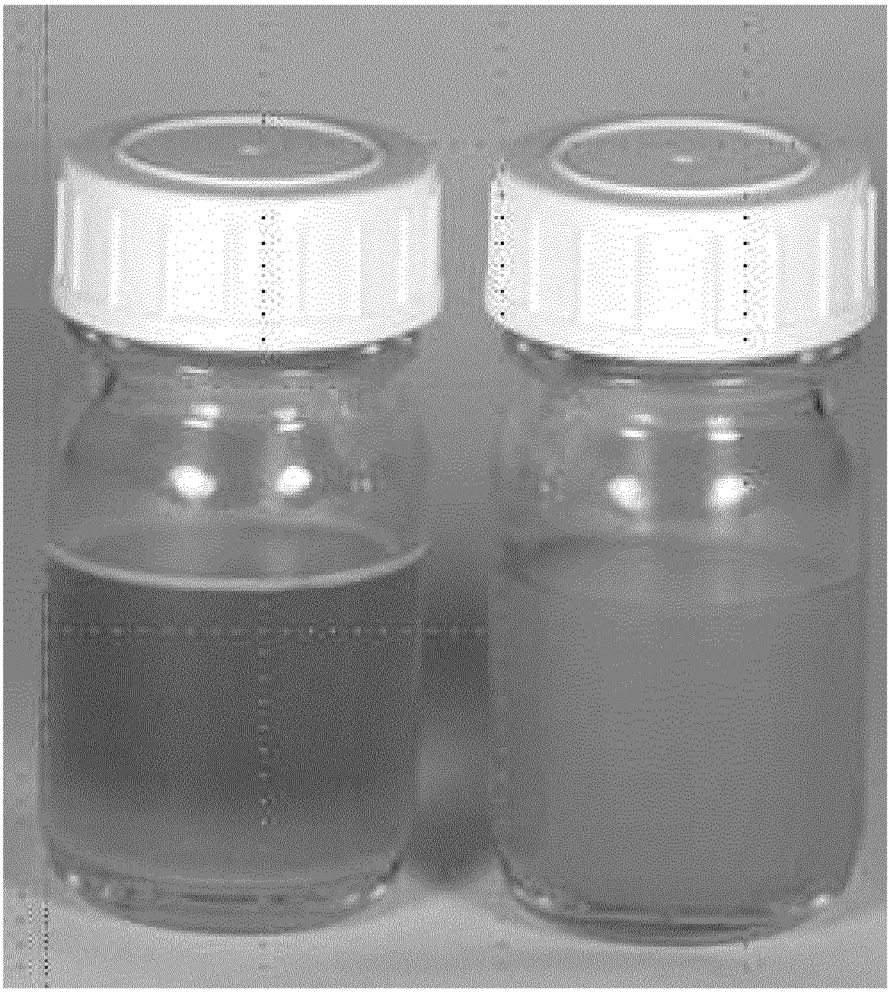

Abbildung 3

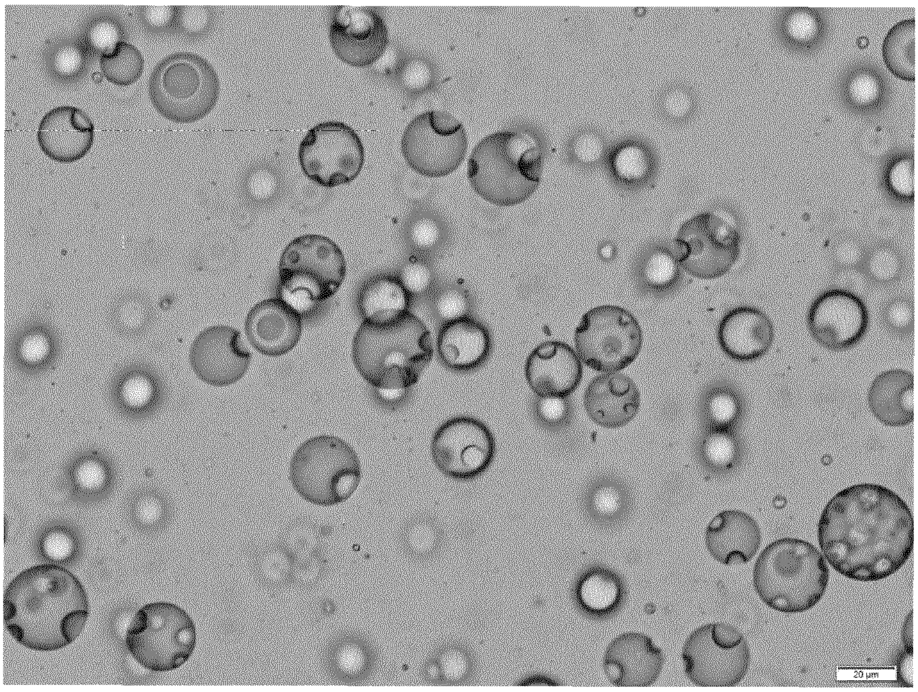

Abbildung 4

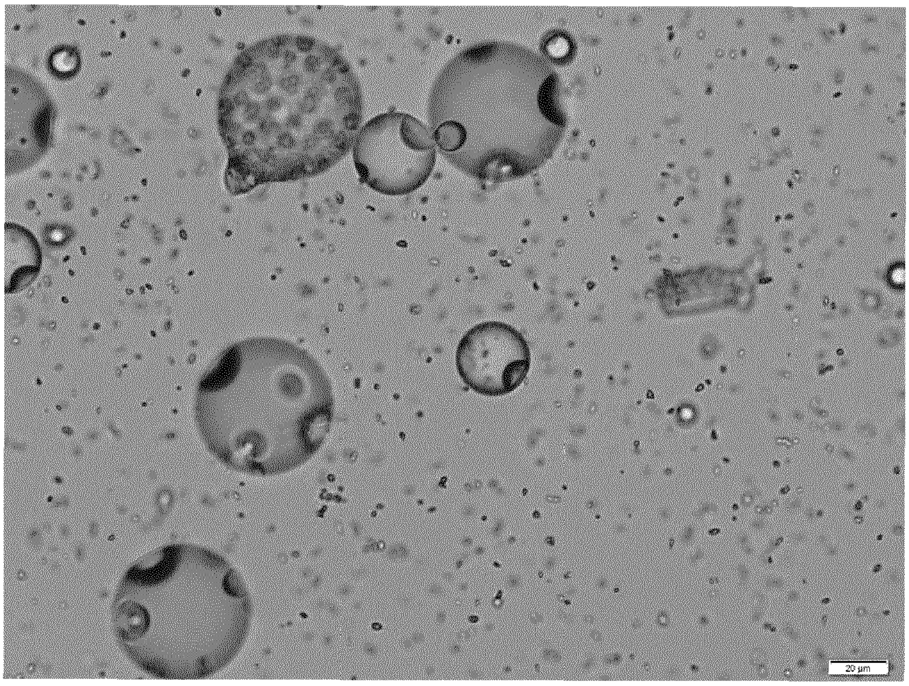

Abbildung 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2111214 B1
- DE 2303866 A1
- EP 2669835 A1
- EP 2204155 A1
- EP 2757146 A1